# EUROPÄISCHE PATENTSCHRIFT

(11) **EP 0 938 425 B1**
(45) Veröffentlichungstag und Bekanntmachung des Hinweises auf die Patenterteilung: **05.12.2001**
(21) Anmeldenummer: 97910324.9
(22) Anmeldetag: 22.09.1997
(51) Int. Cl.: B62J 9/00

(54) **FAHRRADKORB**
BASKET FOR BICYCLES
PANIER POUR CYCLES

(30) Priorität: 19.11.1996 DE 29620043 U; 31.01.1997 DE 29701597 U
(43) Veröffentlichungstag der Anmeldung: 01.09.1999
(73) Patentinhaber: Löhr GmbH, 59199 Bönen (DE)
(72) Erfinder: LÖHR, Hans-Gerhard, D-59069 Hamm (DE)
(74) Vertreter: Fleck, Hermann-Josef, Dr.-Ing.
(86) Internationale Anmeldenummer: EP9705180
(87) Internationale Veröffentlichungsnummer: WO9822332

(56) Entgegenhaltungen:
- WO-A-94/11233
- DE-A- 19 534 204
- DE-U- 9 302 297
- FR-A- 1 127 921
- PATENT ABSTRACTS OF JAPAN vol. 097, no. 006, 30.Juni 1997 & JP 09 030471 A (O G K GIKEN KK), 4.Februar 1997,

## Beschreibung

Die Erfindung bezieht sich auf einen Fahrradkorb mit einer Koppelvorrichtung zum lösbaren Einhängen an mindestens einem im Lenkerbereich des Fahrrads angebrachten Koppelteil.

Ein derartiger Fahrradkorb mit Koppelvorrichtung ist in der DE-U-9 302 297 oder in der DE-A-3 927 086 angegeben.

In der DE 39 27 086 A1 ist eine Gepäcktasche mittels eines Anschlußstückes an einem ebenfalls an der Lenkstange vorgesehenen Koppelstück anbringbar. Das Anschlußstück weist in das Koppelstück nach außen vorragende Halteteile auf, die nach Abnahme der Tasche störend wirken können.

Der Erfindung liegt die Aufgabe zugrunde, einen Fahrradkorb der eingangs genannten Art bereitzustellen, der einfach ausgebildete Koppelelemente aufweist und, vom Fahrrad abgenommen, keine störenden Teile aufweist.

Diese Aufgabe wird mit den im Anspruch 1 angegebenen Merkmalen gelöst. Hiernach ist also vorgesehen, daß in die dem mindestens einen Koppelteil zugekehrte Seitenwand des Fahrradkorbes eine oder mehrere Koppelplatten fest integriert sind, in der an das Koppelteil angepaßte Einhängeelemente in der Ebene der Koppelplatte mittels mindestens eines entsprechend geformten Fensters gebildet sind.

Mit diesen Maßnahmen ist der Fahrradkorb ohne zusätzliche anzubringende Teile an dem Koppelstück anbringbar. Das Fenster mit den Koppelelementen kann einfach z.B. durch entsprechende Ausstanzung der Koppelplatte oder Formung hergestellt werden. Mehrere Koppelplatten mit jeweiligen Fenstern können entsprechend mehreren Aufnahmen eines oder mehrerer Koppelteile in der zugekehrten Seitenwand des Fahrradkorbs angeordnet werden, so daß sich eine stabile Abstützung erzielen läßt. Da die Koppelplatte(n) in die Seitenwand integriert ist (sind) und im wesentlichen nicht über die äußerste Ebene der Seitenwand vorragt (vorragen), ist der Fahrradkorb bei der üblichen, nach unten leicht konisch zulaufenden Form ungehindert stapelbar.

Mit der Maßnahme, daß die in der Ebene der Seitenwand liegende(n) Koppelplatte(n) zumindest an ihren Seitenrändern von Gitterstäben eingefaßt ist (sind), wird die Anordnung der Koppelplatte bei der Montage eindeutig vorgegeben und eine einfache, stabile Anbringung erreicht.

Insbesondere bei Fahrradkörben aus relativ dünnen, feinmaschigen Seitenwänden, wie sie zunehmend in Gebrauch kommen, ist eine Ausbildung günstig, bei der die Koppelplatte(n) auf der Seitenwand angebracht ist (sind) und bei der Gitterelemente der Seitenwand im Bereich der Fenster ausgeschnitten sind.

Für die Herstellung, die Haltbarkeit sowie das Aussehen ist es günstig, wenn vorgesehen ist, daß die Gitterelemente, Gitterstäbe und die Koppelplatte(n) gemeinsam mit Lack oder Kunststoff überzogen sind. Hierdurch werden auch scharfkantige Übergänge vermieden.

Die Koppelplatte kann zum Beispiel einfach in der Weise angebracht werden, daß sie eingeschweißt oder eingeklebt ist.

Eine einfach ausgebildete Koppelplatte kann z.B. ein rechteckiges oder langlochartiges Fenster mit der oberen Seite als Einhängeelement sein, wobei die Rechteckform (oder Langlöcher) im wesentlichen auf die Breite der Aufnahmen abgestimmt ist (sind), um eine seitliche Verschiebung weitgehend auszuschließen oder wird dadurch erhalten, daß das/die Fenster eine rechteckförmige Grundform aufweisen und daß die Einhängeelemente jeweils als in einer oberen Ecke angeordnete und die weiteren Einhängeelemente als an einer entsprechenden vertikalen Rechteckseite angeordnete, in den lichten Raum der Fenster ragende und in der Plattenebene liegende Vorsprünge ausgebildet sind. Dabei liegen die Einhängeelemente eines Fensters insbesondere vertikal übereinander, so daß der Korb mit der Seitenwand flach an das Koppelstück ansetzbar und durch eine einfache Abwärtsbewegung in die Aufnahmen des Koppelstücks einhängbar ist. Dabei wird eine stabile Ankopplung erreicht und ein Kippen des Korbes vermieden.

Die Maßnahmen, daß die die Seitenränder der Koppelplatte(n) einrahmenden Gitterstäbe auf den Gitterelementen der Seitenwand fest angebracht sind und sich bis an den unteren Rand der Seitenwand oder über diesen hinaus im Bodenbereich des Fahrradkorbes fortsetzen, eignen sich insbesondere bei dünnwandigen, feinmaschigen Drahtkörben, da dadurch die Koppelplatte nicht nur eindeutig festgelegt, sondern auch eine Verstärkung der Seitenwand erzielt wird.

Eine zusätzliche Abstützung des Fahrradkorbes kann dadurch erzielt werden, daß er im angekoppelten Zustand mittels Stützen an der Vorderradachse oder Vordergabel abgestützt ist.

Zum einfachen Abnehmen und Handhaben des Fahrradkorbes ist die Maßnahme günstig, daß er einen abklappbaren Tragbügel aufweist. Zusammen mit einer in vertikaler Richtung auszuführenden Einhänge- und Abnahmebewegung wird die Bedienbarkeit unterstützt.

Eine Verriegelung mittels eines an dem Koppelteil vorgesehenen Verriegelungsbolzens oder dgl. wird dadurch ermöglicht, daß in der Koppelplatte eine Riegelaufnahme vorgesehen ist.

Die Erfindung wird nachfolgend anhand eines Ausführungsbeispiels unter Bezugnahme auf die Zeichnungen näher erläutert. Es zeigen:
- Fig. 1: einen Fahrradkorb aus Draht-Gitterstäben mit integrierter Koppelplatte in perspektivischer Ansicht von der Koppelseite,
- Fig. 2: einen Ausschnitt des in Fig. 1 gezeigten Fahrradkorbs und ein an dem Lenker anzubringendes Koppelteil in Form eines Koppelstücks in Explosionsdarstellung.

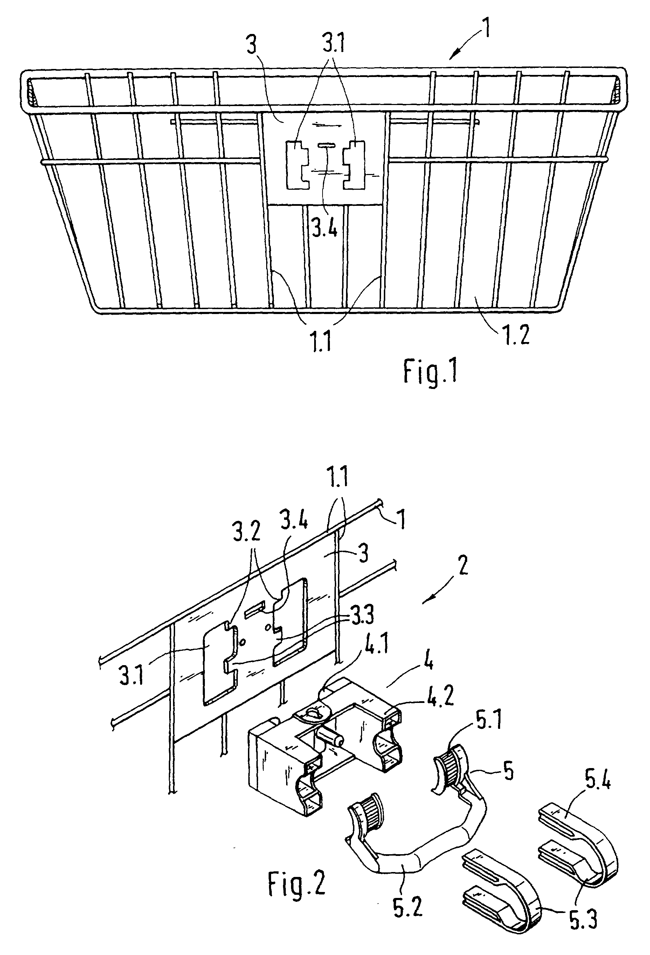

Fig. 1 zeigt einen Fahrradkorb 1 aus Draht-Gitterstäben 1.1. In einer Seitenwand 1.2, mit der der Fahrradkorb 1 an einem Lenker, d.h. an einem Lenkerbügel oder einem Lenkervorbau, über ein Koppelteil in Form eines Koppelstücks 4 angekoppelt wird, ist unterhalb des oberen Randes in der Mitte der Seitenwand 1.2 eine Koppelplatte 3 integriert. Die Koppelplatte 3 und das an dem Lenker anzubringende Koppelstück 4 (siehe Fig. 2) bilden eine Koppelvorrichtung 2.

Die Koppelplatte 3 ist zwischen zwei im wesentlichen vertikalen Gitterstäben 1.1 seitlich eingefaßt und liegt mit ihrem oberen Rand an der Unterseite des den oberen Rand des Fahrradkorbes 1 bildenden Gitterstabs an, so daß eine eindeutige Positionierung der Koppelplatte 3 und eine einfache Befestigung ermöglicht werden. Die Koppelplatte 3 liegt dadurch mit ihrer nach außen gekehrten Oberfläche im wesentlichen in der Außenebene der Seitenwand 1.2. In der Koppelplatte 3 sind zwei Fenster 3.1 zum Beispiel durch entsprechende Ausformung oder durch Stanzen ausgebildet. Die Fenster 3.1 besitzen die Grundform eines vertikal ausgerichteten Rechtecks, wobei an den zueinander gekehrten Innenseiten der Fenster 3.1 in den lichten Raum vorstehende Einhängeelemente 3.2 und weitere Einhängeelemente 3.3 ausgebildet sind, wie auch in Fig. 2 dargestellt. Die Einhängeelemente 3.2 sind in der oberen Ecke angeordnet, während die weiteren Einhängeelemente 3.3 etwas unterhalb der Mitte positioniert sind. Zwischen den beiden Fenstern ist ein weiterer Durchbruch als Riegelaufnahme 3.4 gebildet, in den ein Verriegelungsbolzen des Koppelstücks 4 eingreifen kann.

Das Koppelstück 4 weist an seinem der Seitenwand 1.2 des Fahrradkorbes 1 zugekehrten Vorderseite Aufnahmen 4.1 auf, die entsprechend den Einhängeelementen 3.2 und weiteren Einhängeelementen 3.3 positioniert und auf diese so abgestimmt sind, daß sich ein stabiler Gleitsitz ergibt, wobei der Fahrradkorb 1 zunächst an der Vorderseite des Koppelstücks 4 so in Anlage gebracht wird, daß die Aufnahmen 4.1 vertikal unterhalb der Einhängeelemente 3.2 und weiteren Einhängeelemente 3.3 liegen und der Fahrradkorb 1 durch einfaches Abwärtsschieben mit den Einhängeelementen 3.2 und den weiteren Einhängeelementen 3.3 in die Aufnahmen 4.1 eingehängt werden kann. Die Riegelaufnahme 3.4 ermöglicht einen rastenden Eingriff eines Riegelbolzens oder einen Eingriff eines mit einem Schlüssel zu betätigenden Riegelbolzens, so daß der Korb nicht nur während der Fahrt zusätzlich gesichert werden kann, sondern auch ein unbefugtes Abnehmen verhindert wird.

Das Koppelstück 4 wird mit einem Befestigungsabschnitt 4.2 an dem Lenkerbügel mittels Schellen 5.3 befestigt, wobei Steckzapfen 5.4 in entsprechend ausgebildete Kammern des Befestigungsabschnitts 4.2 eingesteckt und von der Vorderseite des Koppelstücks 4 aus mittels Schrauben festgezogen werden. Um ein Abkippen des Koppelstücks 4 zu verhindern, ist zwischen den Schellen 5.3 und dem Lenkerbügel zusätzlich ein mit einer Zahnung 5.1 versehener Haltebügel 5 festlegbar, der sich mit einer Stützbrücke 5.2 unter dem Lenkervorbau abstützt. Die außenliegende Zahnung 5.1 wirkt dabei mit einer angepaßten Innenzahnung der Schellen 5.3 zusammen, wie in der eingangs angegebenen deutschen Patentanmeldung Nr. 195 34 205 näher erläutert.

Die Koppelplatte 3 ist vorzugsweise eingeschweißt, kann aber auch anders befestigt, z.B. aufgeklebt sein. Nach der Befestigung an dem Korb kann dieser zusammen mit der Koppelplatte lackiert oder kunststoffbeschichtet werden.

Die Koppelplatte ist insbesondere auch für feinmaschige Körbe geeignet, wie sie zunehmend in Gebrauch kommen. Hierbei sind die Seitenwände relativ dünnwandig, so daß bei derartigen Körben Gitterstäbe 1.1 zur Verstärkung zusätzlich auf der Seitenwand beidseitig von der Koppelplatte 3 aufgebracht werden, die sich im Bodenbereich des Korbes fortsetzen können. Bei derartigen feinmaschigen Fahrradkörben kann die Koppelplatte 3 auf der Seitenwand befestigt werden, wobei die Seitenwand im Bereich der Fenster 3.1 vorher oder anschließend ausgeschnitten wird. Auch die verstärkenden Gitterstäbe 1.1 sind dann auf der Seitenwand befestigt, so daß die Koppelplatte 3 auch dabei im wesentlichen in der äußeren Ebene der Seitenwand 1.2 liegt.

Insbesondere größere Fahrradkörbe 1 können zusätzlich mittels Stützstreben an der Fahrradachse oder Vordergabel gestützt sein. Zum Handhaben des Fahrradkorbes 1 besitzt dieser vorzugsweise einen Tragbügel, so daß der Fahrradkorb 1 auch leicht mit einer Hand vom Fahrrad abgenommen werden kann.

## Patentansprüche

1. Fahrradkorb mit einer Koppelvorrichtung zum lösbaren Einhängen an mindestens einem im Lenkerbereich des Fahrrads angebrachten Koppelteil,
**dadurch gekennzeichnet,**
**daß** in die dem mindestens einen Koppelteil (4) zugekehrte Seitenwand (1.2) des Fahrradkorbes (1) eine oder mehrere Koppelplatten (3) fest integriert sind, in der an das Koppelteil (4) angepaßte Einhängeelemente (3.2, 3.3) in der Ebene der Koppelplatte (3) mittels mindestens eines entsprechend geformten Fensters (3.1) gebildet sind.

2. Fahrradkorb nach Anspruch 1,
**dadurch gekennzeichnet,**
**daß** die in der Ebene der Seitenwand (1.2) liegende(n) Koppelplatte(n) (3) zumindest an ihren Seitenrändern von Gitterstäben (1.1) eingefaßt ist (sind).

3. Fahrradkorb nach Anspruch 1 oder Anspruch 2,
**dadurch gekennzeichnet,**
**daß** die Koppelplatte(n) (3) auf der Seitenwand (1.2) angebracht ist (sind) und
**daß** Gitterelemente der Seitenwand im Bereich der Fenster (3.1) ausgeschnitten sind.

4. Fahrradkorb nach einem der Ansprüche 1 bis 3,
**dadurch gekennzeichnet,**
**daß** die Gitterelemente, Gitterstäbe (1.1) und die Koppelplatte(n) (3) gemeinsam mit Lack oder Kunststoff überzogen sind.

5. Fahrradkorb nach einem der Ansprüche 1 bis 4,
**dadurch gekennzeichnet,**
**daß** die Koppelplatte (3) eingeschweißt oder eingeklebt ist.

6. Fahrradkorb nach einem der Ansprüche 1 bis 5,
**dadurch gekennzeichnet,**
**daß** das mindestens eine Fenster (3.1) eine rechteckförmige Grundform aufweist und
**daß** die Einhängeelemente (3.2) jeweils als in einer oberen Ecke angeordnete und die weiteren Einhängeelemente (3.3) als an einer entsprechenden vertikalen Rechteckseite angeordnete, in den lichten Raum der Fenster (3.1) ragende und in der Plattenebene liegende Vorsprünge ausgebildet sind.

7. Fahrradkorb nach einem der Ansprüche 2 bis 6,
**dadurch gekennzeichnet,**
**daß** die die Seitenränder der Koppelplatte(n) (3) einrahmenden Gitterstäbe (1.1) auf Gitterelementen der Seitenwand (1.2) fest angebracht sind und sich bis an den unteren Rand der Seitenwand (1.2) oder über diesen hinaus im Bodenbereich des Fahrradkorbes (1) fortsetzen.

8. Fahrradkorb nach einem der Ansprüche 1 bis 7,
**dadurch gekennzeichnet,**
**daß** er im angekoppelten Zustand mittels Stützen an der Vorderradachse oder Vordergabel abgestützt ist.

9. Fahrradkorb nach einem der Ansprüche 1 bis 8,
**dadurch gekennzeichnet,**
**daß** er einen abklappbaren Tragbügel aufweist.

10. Fahrradkorb nach einem der Ansprüche 1 bis 9,
**dadurch gekennzeichnet,**
**daß** in der Koppelplatte (3) eine Riegelaufnahme (3.4) vorgesehen ist.

## Claims

1. Bicycle basket having a coupling device for detachable suspension on at least one coupling element attached in the handlebar region of the bicycle,
**characterised in that**
there are rigidly integrated into the bicycle basket (1) side wall (1.2) which faces the at least one coupling element (4) one or more coupling plates (3) in which suspension elements (3.2, 3.3) adapted to the coupling element (4) are formed in the plane of the coupling plate (3) by means of at least one correspondingly shaped window (3.1).

2. Bicycle basket according to claim 1,
**characterised in that**
the coupling plate(s) (3) lying in the plane of the side wall (1.2) is (are) bordered by bars (1.1) at least on their side edges.

3. Bicycle basket according to claim 1 or claim 2,
**characterised in that**
the coupling plate(s) (3) is (are) attached to the side wall (1,2) and
that grille members of the side wall are cut out in the region of the windows (3.1).

4. Bicycle basket according to one of claims 1 to 3,
**characterised in that**
the grille members, bars (1.1) and the coupling plates (3) are all coated with lacquer or plastics material.

5. Bicycle basket according to one of claims 1 to 4,
**characterised in that**
the coupling plate (3) is welded or glued in.

6. Bicycle basket according to one of claims 1 to 5,
**characterised in that**
the at least one window (3.1) has a rectangular basic shape and
that the suspension elements (3.2) are configured respectively as projections disposed in an upper corner and the further suspension elements (3.3) as projections disposed on a corresponding vertical rectangle side and which project into the clear space of the windows (3,1) and lie in the plane of the plate.

7. Bicycle basket according to one of claims 2 to 6,
**characterised in that**
the bars (1.1) framing the side edges of the coupling plate(s) (3) are securely attached to grille members of the side wall (1,2) and continue to the lower edge of the side wall (1.2) or beyond said edge in the base region of the bicycle basket (1).

8. Bicycle basket according to one of claims 1 to 7,
**characterised in that**
in the attached state it is supported by means of supports on the front wheel axle or front fork.

9. Bicycle basket according to one of claims 1 to 8,
**characterised in that**
it has a folding-down carrying strap.

10. Bicycle basket according to one of claims 1 to 9,
**characterised in that**
a locking bar receiver (3.4) is provided in the coupling plate (3).

## Revendications

1. Panier de bicyclette avec un dispositif d'accouplement pour l'accrochage démontable à au moins une pièce d'accouplement montée dans la zone du guidon de la bicyclette,
**caractérisé en ce**
**que**, dans la paroi latérale (1.2) du panier de bicyclette (1) tournée vers la au moins une pièce d'accouplement (4), sont intégrées de manière fixe une ou plusieurs plaques d'accouplement (3) dans lesquelles des éléments d'accrochage (3.2, 3.3) adaptés à la pièce d'accouplement (4) sont formés, au moyen d'au moins une fenêtre (3.1) de forme correspondante, dans le plan de la plaque d'accouplement (3).

2. Panier de bicyclette selon la revendication 1,
**caractérisé en ce**
**que** la (les) plaque(s) d'accouplement (3) disposée dans le plan de la paroi latérale (1.2) est (sont) entourée(s) sur au moins ses (leurs) bords latéraux par des barreaux de grille (1.1).

3. Panier de bicyclette selon la revendication 1 ou la revendication 2,
**caractérisé en ce**
**que** la (les) plaque(s) d'accouplement est (sont) montée(s) sur la paroi latérale (1.2) et
**que** des éléments de grille de la paroi latérale sont découpées dans la zone des fenêtres (3.1).

4. Panier de bicyclette selon l'une des revendications 1 à 3,
**caractérisé en ce**
**que** les éléments de grille, les barreaux de grille (1.1) et la (les) plaque(s) d'accouplement (3) sont recouverts en commun d'une laque ou d'une matière synthétique.

5. Panier de bicyclette selon l'une des revendications 1 à 4,
**caractérisé en ce**
**que** la plaque d'accouplement (3) est soudée ou collée.

6. Panier de bicyclette selon l'une des revendications 1 à 5,
**caractérisé en ce**
**que** la au moins une fenêtre (3.1) présente une forme de base rectangulaire et
**que** les éléments d'accrochage (3.2) sont formés respectivement par des saillies disposées dans un coin supérieur et les autres éléments d'accrochage (3.3) par des saillies disposées sur un côté de rectangle vertical correspondant, en saillie dans l'aire de la fenêtre (3.1) et disposées dans le plan de la plaque.

7. Panier de bicyclette selon l'une des revendications 2 à 6,
**caractérisé en ce**
**que** les barreaux de grille (1.1) entourant les bords latéraux de la (des) plaque(s) d'accouplement (3) sont montés de manière fixe sur des éléments de grille de la paroi latérale (1.2) et se continuent jusqu'au bord inférieur de la paroi latérale (1.2) ou au-dessus de celui-ci dans la zone de fond du panier de bicyclette (1).

8. Panier de bicyclette selon l'une des revendications 1 à 7,
**caractérisé en ce**
**que**, à l'état accouplé, il est en appui sur l'axe de roue avant ou la fourche avant au moyen de supports.

9. Panier de bicyclette selon l'une des revendications 1 à 8,
**caractérisé en ce**
**qu'**il présente une anse repliable.

10. Panier de bicyclette selon l'une des revendications 1 à 9,
**caractérisé en ce**
**qu'**un logement de pêne (3.4) est ménagé dans la plaque d'accouplement (3).
